# EUROPEAN PATENT APPLICATION

(11) **EP 2 145 761 A1**
(43) Date of publication of application: **20.01.2010**
(21) Application number: 08425467.1
(22) Date of filing: 04.07.2008
(51) Int. Cl.: B32B 27/12, B32B 27/40, D06N 3/00, D06N 3/14, A41D 7/00

(54) **Membrane for bathing costumes and the like, and process for producing said membrane**

(71) Applicant: Ferrari S.a.s. di Iannone E., 25020 Bassano Bresciano (BS) (IT)
(72) Inventor: Iannone, Raffaele, 25080 Padenghe sul Garda (Brescia) (IT)
(74) Representative: Lunati, Vittoriano

(57) **Abstract**

Provided herein is a membrane (1) for bathing costumes and the like comprising an elastic fabric (2) and a polymeric film (3), which are connected together, and the polymeric film (3) comprising an adhesive layer (4) made of aliphatic polyurethane resins connected to said fabric (2), a surface layer (6) made of aliphatic polyurethane resins, constituting the outer surface opposite to the fabric (2) of the membrane (1), and an intermediate layer (5), made of aromatic polyurethane resins set between the surface layer (6) and the adhesive layer (4). Also provided is a transfer process (10) for obtaining said membrane (1).

## Description

The subject of the present invention is a membrane for bathing costumes and the like and a process for the production of said membrane of the type specified in the preamble of the first claim.

There are currently known different types of membranes constituted by a fabric, obtained by interweaving a plurality of threads of yarn, connected to a flexible polymeric film.

Said membranes present the characteristics of flexibility of the fabrics and, at the same time, present the advantages of the films made of polymeric material, such as impermeability, resistance to stains, and others still. Coupling between the fabrics and polymeric films is usually obtained via a process referred to as "transfer process".

According to said process, the polymeric film is initially obtained by spreading the same polymeric material in the liquid state on a roll of paper, referred to as "transfer paper".

Next, the polymeric film is separated from the transfer paper and coupled to the fabric to form the membrane.

Said membrane enables, moreover, a mutual joining via heat-sealing in a region corresponding to the face including the polymeric film.

Said heat-sealing presents the advantage of being less costly and faster than traditional stitching.

The known technique referred to above presents, however, certain important drawbacks.

In fact, in order to obtain a high impermeability of the membrane, it is necessary to resort to very large thicknesses of the polymeric films and thus increase the weight of the membrane considerably.

Said membranes have then a low elasticity, in particular on account of the polymeric films that do not possess the same elasticity as the underlying fabrics.

In addition, in order to provide heat-sealed joins of a number of membranes, it is necessary to couple said membranes along the faces presenting the polymeric film, and it would be preferable to be able to couple the membranes themselves along any side.

In this situation the technical task tackled by the present invention is to devise a membrane for bathing costumes and the like that will be able to overcome substantially the drawbacks referred to above.

In the framework of said technical task, an important purpose of the invention is to obtain a membrane having a high impermeability.

Another important purpose of the invention is to provide a membrane for bathing costumes having a reduced weight per unit surface.

Yet another purpose of the invention is to provide a membrane having a high elasticity.

A further purpose of the invention is to devise a membrane that will enable optimization of the heat-sealing processes.

The technical task and the purposes specified above are achieved by an elastic membrane as specified in the annexed Claim 1.

Preferred embodiments are highlighted in the dependent claims.

Further characteristics and advantages of the invention are further clarified hereinafter from the detailed description of a preferred embodiment of the invention, with reference to the annexed drawings, in which:
**Figure 1** shows a scheme of the system designed to implement the process according to the invention;

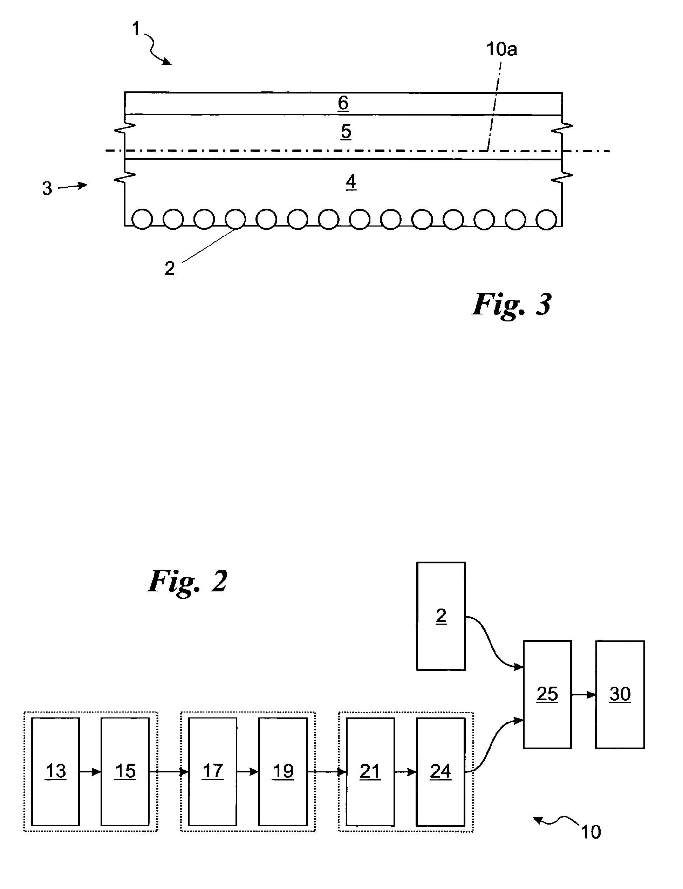

**Figure 2** is a diagram of the process according to the invention; and
**Figure 3** illustrates the cross section of a membrane according to the invention.

With reference to the above figures, the membrane according to the invention is designated as a whole by the reference number **1.**

It develops prevalently along a surface **1a** and comprises a fabric **2** and a polymeric film **3,** which are connected together.

In particular, the fabric 2 is an elastic fabric obtained at least partially from polyamide threads and from elastomer threads.

The polymeric film 3 is, instead, mainly constituted by polyurethane resins and has a weight per unit surface preferably comprised between a 40 g/m² and 80 g/m² and more preferably between 55 g/m² and 65 g/m².

It is made up of three layers: an adhesive layer **4,** in contact with the fabric 2 and designed to provide the coupling between the fabric 2 itself and the polymeric film 3, a surface layer **6,** constituting the outer surface opposite to the fabric 2 of the membrane 1, and an intermediate layer **5,** set between the surface layer 6 and the adhesive layer 4.

Said adhesive layer 4, intermediate layer 5, and surface layer 6 are all prevalently made of polyurethane resins.

In detail, the surface layer 6 comprises a mixture of single-component polyether-based aliphatic polyurethane resins with high resistance to light and to hydrolysis and has a weight per unit surface preferably comprised between 5 g/m² and 15 g/m² and more preferably between 8 g/m² and 12 g/m². The intermediate layer 5 comprises a mixture of single-component aromatic polyurethane resins with an elastic modulus conveniently comprised between 40 and 50 kg/cm² and an extremely high ultimate elongation. It has moreover a weight per unit surface preferably comprised between 12 g/m² and 28 g/m² and more preferably between 18 g/m² and 22 g/m².

The adhesive layer 4 comprises, instead, a mixture of bicomponent aliphatic polyurethane resins, with melamine cross-linking, with an elastic modulus preferably comprised between 4 and 10 kg/cm². It has a weight per unit surface preferably comprised between 12 g/m² and 38 g/m² and more preferably between 28 g/m² and 32 g/m².

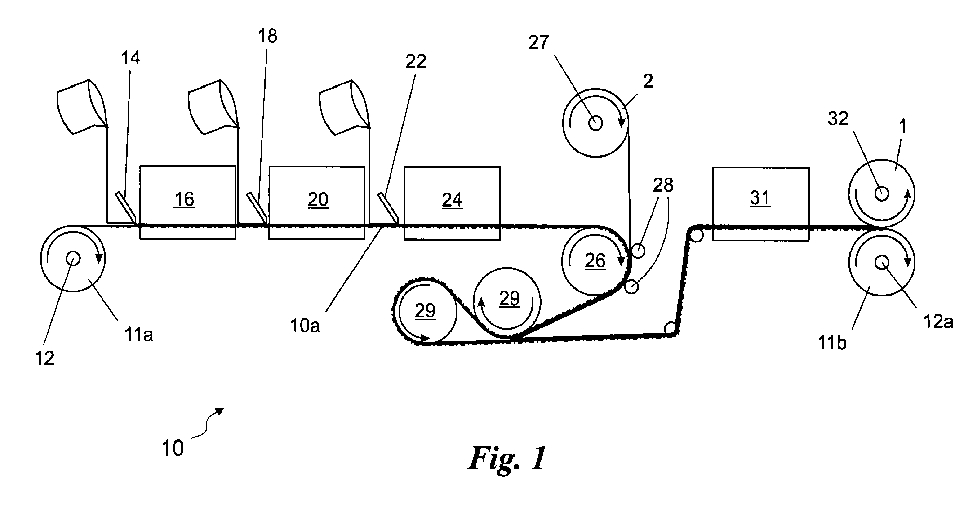

The membrane 1 is obtained via a process schematically illustrated in Figure 1 and designated by the reference number **10.**

The process 10 comprises a transfer process.

The polymeric film 3 is thus initially obtained on a transfer paper **11,** in itself known. The paper conveniently has an opaque and very smooth surface and preferably a substance comprised between 150 g/m² and 160 g/m².

The transfer paper 11 is moved along a processing line **10a** and preferably laid along a horizontal surface.

It is conveniently set in rolls **11a** on a purposely designed roller **12** and moved in the direction of movement 10a by unwinding thereof by means of a driving roller **12a,** which preferably coincides with the roller for supporting the roll **11b** of transfer paper 11 at the end of processing.

The process 10 comprises a first step of spreading **13** of the surface layer 6.

Said first step 13 comprises spreading of a polyurethane with purposely provided solvent on the transfer paper 11.

In particular, there is spread a mixture of single-component polyether-based aliphatic polyurethane resins with high resistance to light and hydrolysis, as described previously, diluted with solvent constituted by DMF (dimethyl formamide).

The polyurethanes, or the dry product, are preferably present in percentages comprised between 20 wt% and 40 wt%, and more preferably between 27 wt% and 33 wt%, with respect to the total weight of the polyurethanes and of the solvent.

Spreading is performed via devices in themselves known and via at least one first doctor blade **14,** set in the proximity of the transfer paper 11 and at a predefined distance therefrom.

The first doctor blade 14 designed to distribute homogeneously the polyurethane over the paper 11 and to obtain the desired amounts thereof, in particular the amounts designed to provide the weight per unit surface of the surface layer 6 described above.

The first step of spreading 13 of the surface layer 6 is followed by a first step of drying **15** of said layer and in particular of the solvent.

The first drying step 15 is performed preferably in a first oven **16** set along the processing line 10a and so as to wind the transfer paper 11, on which the surface layer 6 is spread along a segment in the processing direction 10a. Said first oven 16 is preferably brought to a temperature comprised between 120°C and 140°C and is traversed by the transfer paper 11 containing the surface layer 6 for a period preferably comprised between 20 s and 60 s and more preferably between 35 s and 45 s. The solvent of the surface layer 6 is then brought to evaporation, leaving the polyurethane fixed on the transfer paper 11.

Following upon the first drying step, a second spreading step **17** is performed, designed to provide the intermediate layer 5.

Also the second spreading step 17 is performed like the first spreading step 13 with a polyurethane with an appropriate solvent and by means of purposely designed devices and a second doctor blade **18.**

The intermediate layer 5 is then set on the surface layer 6.

In the present case, the material spread, as has been mentioned previously, is a mixture of single-component aromatic polyurethane resins with an elastic modulus comprised between 40 and 50 kg/cm² and an extremely high ultimate elongation.

Also in this case, the diluent is preferably DMF, and the polyurethanes, or the dry product, are preferably present in a percentage comprised between 15% and 30%, and more preferably between 21% and 25%, with respect to the total weight of the polyurethanes and of the solvent.

The second step of spreading 17 of the intermediate layer 5 is followed by a second step of drying **19** of the solvent.

The second drying step 19 is performed in a second oven **20,** similar to the first but preferably comprising a plurality of sections and in particular three sections.

Said sections are set along the processing line 10a and enable diversification of the temperature of the oven in each section.

In particular, the sections have an increasing temperature starting from a first section with a temperature comprised between 100°C and 120°C, traverses a second section with a temperature comprised between 120°C and 140°C, and finally to a last third section with a temperature comprised between 130°C and 150°C. The second oven 20 itself is traversed for a period of time preferably comprised between 70 s and 110 s and more preferably between 85 s and 95 s.

In the second oven 20 the solvent of the intermediate layer 5 evaporates leaving the polyurethane fixed on the surface layer 6 in turn set on the transfer paper 11.

A third spreading step **21** is then envisaged, designed to provide the adhesive layer 4.

Also the third spreading step 21 is performed like the preceding spreading steps 13 and 17, with a polyurethane with appropriate solvent and by means of purposely designed devices and of a second doctor blade **22.**

The adhesive layer 4 is then set on the intermediate layer 5 and comprises a mixture of bicomponent aliphatic polyurethane resins, with melamine cross-linking, having an elastic modulus preferably comprised between 4 and 10 kg/cm²_{.}

The diluent is preferably DMF, and the polyurethanes, or the dry product, are preferably present in percentages comprised between the 30 wt% and 50 wt%, and more preferably between 35 wt% and 45 wt%, with respect to the total weight of the polyurethanes and of the solvent.

The third spreading step 21 is followed by a third step of drying **23** of the solvent.

It is performed in a third oven **24,** similar to the second oven 20, preferably comprising a plurality of sections, and in particular two sections.

They conveniently have a temperature that increases starting from a section with a temperature comprised between 80°C and 100°C, and this is followed by a further section with a temperature preferably comprised between 90°C and 110°C.

Said temperatures do not cause cross-linking of the adhesive layer 4 because they are not sufficiently high, whilst the surface layer 6 and the intermediate layer 5 had previously been brought to higher temperatures and hence crosslinked.

The third oven 24 is traversed for a period of time preferably comprised between 70 s and 110 s and more preferably between 85 s and 95 s.

At this point, the production of the polymeric film 3 described above is completed, and it presents already connected to the transfer paper 11.

The production of the polymeric film 3 is followed by a step of connection **25** thereof to the fabric 2 described above.

The connection step 25 is conveniently performed by means of a heated cylinder **26,** set along the processing line 10a.

In particular, the transfer paper 11 is directly in contact with the heated cylinder 26, whilst the adhesive layer 4 is set towards the outside and is in contact with the fabric 2.

The fabric 2 is in fact set in rolls on a cylinder **27** located in the proximity of the heated cylinder 26.

The fabric 2 is then conveyed onto the surface of the heated cylinder 26 and pressed against the polymeric film 3 by means of purposely provided pressure rollers **28** set substantially tangential to the heated cylinder.

The heated cylinder 26 is preferably brought to a temperature comprised between 130°C and 150°C and is traversed by the polymeric film 3 for a period of time comprised between 2 s and 20 s, and more in particular between 4 s and 8 s.

At said temperature, the adhesive layer 4 returns to a semifluid state and is integrated perfectly with the fabric 2.

At this point the membrane 1, which is still coupled to the transfer paper 11, follows a processing line 10a that envisages the presence of cooling rollers **29** or similar elements, which are designed to bring the membrane 1 back to room temperature.

Finally, a last step of treatment **30** of the membrane 1 is envisaged, in particular a thermal treatment.

Said treatment step 30 is obtained by means of a fourth oven **31,** which also comprises a plurality of sections and in particular three sections.

In particular, the sections have a temperature that increases starting from a first section with a temperature comprised between 130°C and 155°C, traverses a second section at a temperature comprised between 140°C and 160°C, and finally a last third section at a temperature comprised between 150°C and 170°C.

The oven is traversed by the membrane 1 for a period of time preferably comprised between 120 s and 160 s.

The last treatment step 30 enables cross-linking of the adhesive layer 4 whilst the latter is connected and integrated to the fabric 2.

Following upon the treatment step 30, the membrane 1 is ready and is separated from the transfer paper 11 and set in rolls on a purposely provided roller **32.** The transfer paper 11 is, instead, set on the roller 12a.

The roller 32 is moreover appropriately the driving roller, which enables, together with the roller 12a, movement of the membrane 1 along the processing line 10a.

The invention enables important advantages to be obtained.

In fact, the membrane 1 has a high impermeability, due to the particular choice of the materials and the production process.

It can hence be used for bathing costumes, in particular for bathing costumes for sports activities.

The membrane 1 moreover presents a low weight per unit surface and a high elasticity. It thus leads to major advantages in particular for practising sports activities.

Furthermore, thanks to the optimal integration of the fabric 2 with the polymeric film 3, the membrane 1 enables processes of heat-sealing of a number of flaps thereof on both sides of the membrane 1 to be achieved.

The invention may undergo variations, all of which fall within the scope of the inventive idea.

All the items may be replaced by equivalent elements, and the materials, shapes, and dimensions may be any whatsoever.

## Claims

1. A membrane (1) for bathing costumes and the like comprising an elastic fabric (2) and a polymeric film (3), which are connected together and **characterized in that** said polymeric film (3) comprises: an adhesive layer (4) made of aliphatic polyurethane resins connected to said fabric (2), a surface layer (6) made of aliphatic polyurethane resins, constituting the outer surface opposite to said fabric (2) of said membrane (1), and at least one intermediate layer (5), made of aromatic polyurethane resins set between said surface layer (6) and said adhesive layer (4).

2. The membrane (1) according to Claim 1, in which said fabric (2) is obtained at least partially from threads of polyamide yarn and elastomer yarn.

3. The membrane (1) according to one or more of the preceding claims, in which said surface layer (6) has a weight per unit surface preferably comprised between 5 g/m² and 15 g/m².

4. The membrane (1) according to one or more of the preceding claims, in which said intermediate layer (5) has an elastic modulus comprised between 40 kg/cm² and 50 kg/cm² and a weight per unit surface preferably comprised between 12 g/m² and 28 g/m².

5. The membrane (1) according to one or more of the preceding claims, in which said adhesive layer (4) comprises a mixture of melamine cross-linking resins, with an elastic modulus comprised between 4 - 10 kg/cm² and a weight per unit surface preferably comprised between 12 g/m² and 38 g/m².

6. A process (10) for providing a membrane (1) according to one or more of the preceding claims, comprising spreading of a polymeric film (3) on a transfer paper (11), connection (25) of said polymeric film (3) with a fabric (2) for obtaining the membrane (1), and separation of said membrane (1) and said transfer paper (11), said process being **characterized in that** said spreading comprises: at least one first step of spreading (13) and one second step of spreading (17) of aliphatic polyurethane resins diluted in solvent, designed to provide said surface layer (6) and said intermediate layer (5), respectively, said first and second spreading steps (13, 17) being respectively followed by a first step and a second step of drying (15, 19) of said solvent, and at least one subsequent third step of spreading (21) of an aliphatic polyurethane resin designed to obtain said adhesive layer (4).

7. The process (10) according to Claim 6, in which said step of connection (25) is performed by means of sliding of said polymeric film (3) and of said fabric (2) including said transfer paper (11) on a heated cylinder (26) opposed to at least one pressure roller (28).

8. The process (10) according to Claim 7, in which said heated cylinder (26) is brought to temperatures comprised between 130°C and 150°C and is traversed by said polymeric film (3) and said fabric (2) for a period of time of less than 20 s.

9. The process (10) according to one or more of the preceding claims, comprising a final step of treatment (30) of said membrane, designed to enable cross-linking of the layer obtained via said third spreading step (21) and connected to said fabric (2).

10. The process (10) according to one or more of the preceding claims, in which said third spreading step (21) is followed by a step of drying (23) of said solvent at temperatures comprised between 80°C and 110°C.
